# EUROPÄISCHE PATENTSCHRIFT

(11) **EP 1 191 215 B1**
(45) Veröffentlichungstag und Bekanntmachung des Hinweises auf die Patenterteilung: **09.01.2008**
(21) Anmeldenummer: 01120389.0
(22) Anmeldetag: 25.08.2001
(51) Int. Cl.: F02M 21/04, C10L 3/06, F02B 43/00

(54) **Verfahren zur Nutzung methanhaltiger Gase**
Process for using methane containing gases
Procédé d' utilisation des gaz contenant du methane

(30) Priorität: 23.09.2000 DE 10047262
(43) Veröffentlichungstag der Anmeldung: 27.03.2002
(73) Patentinhaber: Green Gas Germany GmbH, 47809 Krefeld (DE)
(72) Erfinder: Rautenbach, Robert, 52066 Aachen (DE); Suleyman, Yuce, 52066 Aachen (DE); Gebel, Joachim, 52066 Aachen (DE); Schmitt, Alexander, 47809 Krefeld (DE)
(74) Vertreter: Albrecht, Rainer Harald

(56) Entgegenhaltungen:
- WO-A-01/61167
- GB-A- 2 117 053
- GB-A- 2 342 390
- US-A- 5 400 746
- US-A- 5 724 805

## Beschreibung

Die Erfindung betrifft ein Verfahren zur Nutzung von methanhaltigem Grubengas, Deponiegas und Biogas aus Vergärungsanlagen und Faulprozessen auf Kläranlagen, dessen Methangehalt unter 40 Vol.-% liegt, wobei das Gas zum Zwecke der Stromerzeugung dem Gasmotor eines Gasmotor/Generatorsatzes zugeführt wird.

Auf einigen Deponien sind Gasmotor/Generatorsätze installiert, die mit Deponiegas betrieben werden. Das aus dem Deponiekörper abgesaugte Deponiegas hat einen Methangehalt von etwa 50 Vol.-%. Der Rest besteht im Wesentlichen aus CO₂ und ein wenig Stickstoff. Wird die Deponie geschlossen, so lässt die Biogasproduktion des Deponiekörpers über einen Zeitraum von etwa 10 Jahren langsam nach. Das installierte Gaserfassungssystem saugt dann zunehmend Luft in den Deponiekörper mit der Folge, dass der Methangehalt des abgesaugten Deponiegases abnimmt. Sinkt der Methangehalt unter 40 %, so kann der Gasmotor nicht mehr ohne weiteres betrieben werden und muss das Deponiegas abgefackelt oder durch katalytische Verbrennung entsorgt werden.

Grubengas ist ein im Wesentlichen aus Methan bestehendes Gas, das durch Bewetterung mit Luft verdünnt wird. Der Methangehalt des Grubengases liegt im Bereich zwischen 30 und 50 Vol.-%, wobei betriebliche Schwankungen unvermeidbar sind. Bei einem Methangehalt von weniger als 40 Vol.-% werden die Gasmotoren abgeschaltet und ist im Rahmen der bekannten Maßnahmen eine Nutzung des Grubengases zur Stromerzeugung nicht mehr möglich.

In der Druckschrift R. Rautenbach et al "Deponiegasgewinnung und -verwertung" in "Abfall, Deponie-Sickerwasser, Deponie-Gas" W. Lukas und T. Peters (Hrsg., Vulkan Verlag, Essen, 2000, Seiten 158-170) wird ein Verfahren zur Nutzung von methanhaltigem Deponiegas beschrieben, dessen Methangehalt unter 40 Vol.-% liegt. Das Gas wird zum Zwecke der Stromerzeugung dem Gasmotor eines Gasmotor/Generatorsatzes zugeführt. Es wird weiter vorgeschlagen, den Inertgasgehalt der dem Gasmotor zugeführten Verbrennungsluft durch eine dem Gasmotor vorgeschaltete Membrantrennanlage zu reduzieren. Es wird beschrieben, dass eine Reduzierung des Stickstoffgehaltes von 79 % auf 77 % N₂ ausreicht, damit ein Gasmotor noch mit einem Schwachgas von 30 % Methan betrieben werden kann. Die Leistungsaufnahme der Membrananlagen wird mit etwa 15 % der vom Motor/Generator produzierten elektrischen Energie angegeben.

Die GB 2 342 390 A beschreibt ein Verfahren zur Verbrennung von gasförmigen Brennstoffen in konventionellen Verbrennungskraftmaschinen, die für die Verbrennung von flüssigen Brennstoffen konzipiert sind. Durch eine Anreicherung des Sauerstoffanteils in der zugeführten Verbrennungsluft mit Hilfe einer Membrantrennanlage können die zur Gewährleistung einer optimalen Verbrennung erforderlichen konstruktiven Maßnahmen an der Maschine reduziert werden bzw. entfallen.

Der Erfindung liegt die Aufgabe zu Grunde, ein Verfahren zur Nutzung von methanhaltigem Grubengas, Deponiegas und Biogas anzugeben, welches mit Gasmotoren üblicher Bauart sicher und wirtschaftlich betrieben werden kann, wenn der Methangehalt des methanhaltigen Gases unter 40 Vol.-% liegt.

Die Aufgabe wird erfindungsgemäß durch ein Verfahren nach Anspruch 1 gelöst.

Durch die erfindungsgemäße Verwendung einer Membrantrennanlage wird das Sauerstoff/Stickstoffverhältnis der dem Gasmotor zugeführten Verbrennungsluft verändert. In der Verbrennungsluft stellt sich ein höherer Sauerstoffgehalt und ein entsprechender niedriger Stickstoffgehalt bzw. Inertgasgehalt ein. Durch die Reduzierung der mit der Verbrennungsluft zugeführten Inertgasmenge kann ein entsprechend höherer Inertgasanteil des methanhaltigen Gasstromes so kompensiert werden, dass der Gasmotor stets unter optimalen Bedingungen betrieben werden kann. Das ermöglicht es, so genannte Schwachgase mit einem Methangehalt von weniger als 40 Vol.-% und einem entsprechend höheren Gehalt an inerten Bestandteilen, insbesondere Stickstoff und/oder CO₂, einzusetzen.

Erfindungsgemäß wird das Sauerstoff/Stickstoffverhältnis der Verbrennungsluft durch den Betrieb der Membrantrennanlage so eingestellt, dass der Gasmotor bei Verwendung eines Schwachgases, dessen Methangehalt weniger als 40 Vol.-% beträgt, mit einem unter motorentechnischen und abgastechnischen Gesichtspunkten optimalen Luftverhältnis betreibbar ist. Der Gasmotor wird mit einem Luftverhältnis von λ = 1,5 bis 1,8 betrieben, wobei ein Luftverhältnis von A = 1,6 bevorzugt ist. Gasmotoren herkömmlicher Bauart lassen sich bei diesem Wert mit einem guten Motorwirkungsgrad und geringen Abgasemission betrieben.

Eine vorteilhafte Ausgestaltung des erfindungsgemäßen Verfahrens sieht vor, dass atmosphärische Luft verdichtet und einem Gaspermeationsmodul der Membrantrennanlage zugeführt wird, dessen Membran eine bevorzugte Permeabilität für Sauerstoff aufweisen. Aus dem Gaspermeationsmodul wird ein Permeat mit einem gegenüber der atmosphärischen Luft reduzierten Inertgasgehalt abgezogen und im Gasmotor als Verbrennungsluft zugeführt. Es versteht sich, dass nach Maßgabe der Verbrennungsluftmenge und der gewünschten Stickstoffabreicherung auch mehrere Gaspermeationsmodule parallel und/oder in Reihe geschaltet werden können.

Im Folgenden wird die Erfindung anhand von Zeichnungen, die lediglich Ausführungsbeispiele darstellen, erläutert. Es zeigen schematisch
- Fig. 1: das erfindungsgemäße Verfahren zur Nutzung methanhaltiger Gase am Beispiel eines Deponiegases,
- Fig. 2: die Anwendung des erfindungsgemäßen Verfahren zur Nutzung von Grubengas,
- Fig. 3: die Stoffbilanz eines mit Erdgas betriebenen Gasmotors,

- Fig. 4: die Stoffbilanz eines nach dem erfindungsgemäßen Verfahren mit Deponiegas betriebenen Gasmotors.

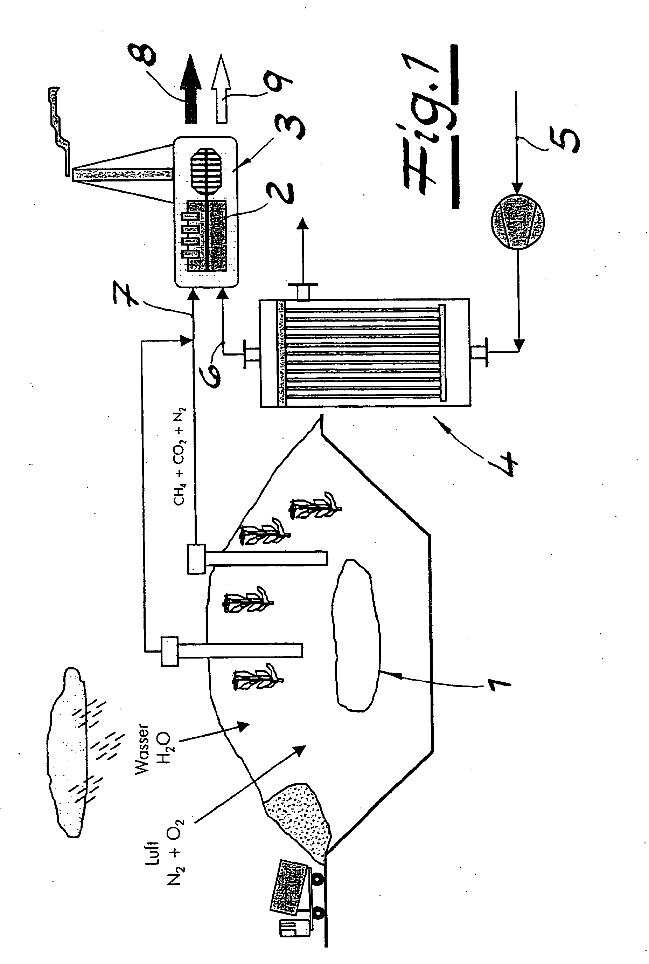

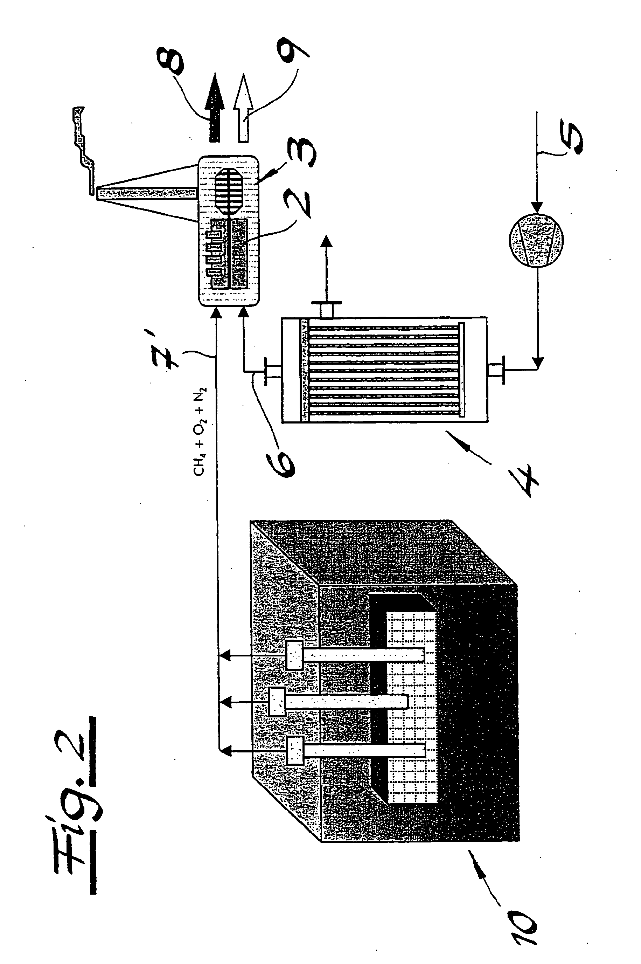

Bei den in den Fig. 1 und 2 dargestellten Verfahren wird ein methanhaltiges Gas, das als Schwachgas einen Methangehalt von weniger als 40 Vol.-% Methan aufweisen kann, zum Zwecke der Stromerzeugung dem Gasmotor 2 eines Gasmotor/Generatorsatzes 3 zugeführt. Bei der in Fig. 1 dargestellten Anwendung besteht das Schwachgas aus Deponiegas 7, das aus einem Deponiekörper 1 abgesaugt wird und im Wesentlichen aus Methan, CO₂ und Stickstoff besteht. Bei der in Fig. 2 dargestellten Anwendung besteht das Schwachgas aus Grubengas 7', das sich im Wesentlichen aus CH₄, O₂ und N₂ zusammensetzt. Durch Bewetterung der Schächte des Steinkohlebergwerks 10 erfolgt eine Verdünnung mit Luft, wobei sich ein Methangehalt von weniger als 40 Vol.-% einstellen kann. Dabei sind betriebliche Schwankungen des Methangehaltes unvermeidbar.

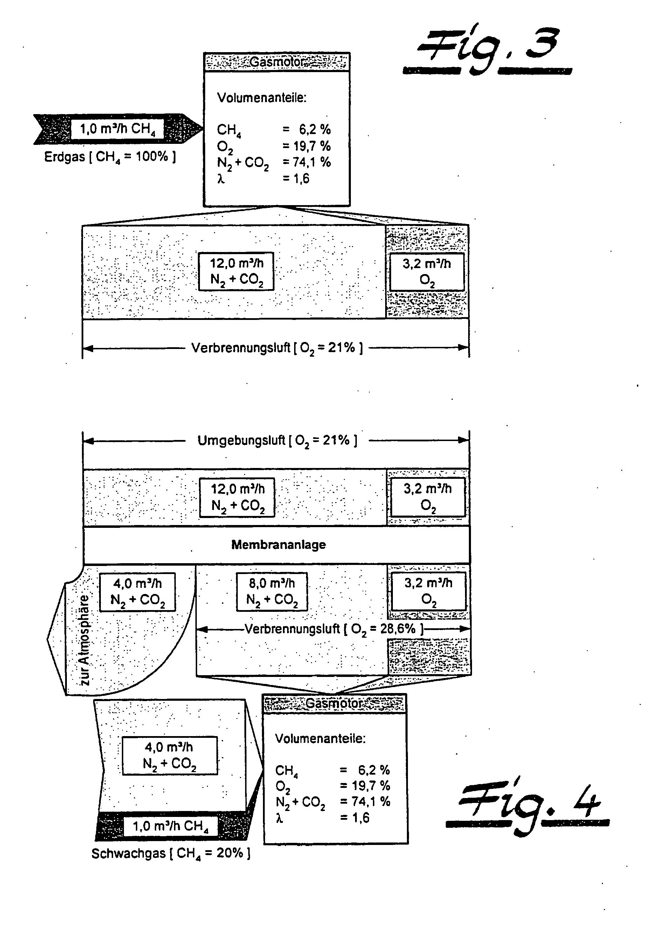

Bei den in Fig. 1 und 2 dargestellten Verfahren wird durch eine dem Gasmotor 2 vorgeschalteten Membrantrennanlage 4 der Inertgasgehalt der dem Gasmotor 2 zugeführte Verbrennungsluft reduziert. Den Figuren entnimmt man, dass atmosphärische Luft 5 verdichtet und einem Gaspermeationsmodul der Membrantrennanlage 4 zugeführt wird, dessen Membranen eine bevorzugte Permeabilität für Sauerstoff aufweisen. Aus dem Gaspermeationsmodul wird ein Permeat 6 mit einem gegenüber der atmosphärischen Luft erhöhten Sauerstoffgehalt und entsprechend reduzierten Inertgasgehalt abgezogen und dem Gasmotor 2 als Verbrennungsluft zugeführt. Das Sauerstoff/Stickstoffverhältnis der Verbrennungsluft kann durch den Betrieb der Membrantrennanlage 4 so eingestellt werden, dass der Gasmotor 2 bei Verwendung eines Schwachgases, dessen Methangehalt weniger als 40 Vol.-% beträgt, mit einem unter motorentechnischen und abgastechnischen Gesichtspunkten optimalen Luftverhältnis betrieben wird. Dies wird aus einer vergleichenden Betrachtung der in den Fig. 3 und 4 dargestellten Stoffbilanzen deutlich.

Die Fig. 3 zeigt die Stoffbilanz eines mit Erdgas betriebenen Gasmotors bei einem unter motorentechnischen und abgastechnischen Gesichtspunkten optimalen Luft-Luftverhältnis λ = 1,6. Im Gasmotor werden bei der in Fig. 3 dargestellten Modellrechnung 1,0 m³/h CH₄ in Form von Erdgas sowie 15,2 m³/h Verbrennungsluft zugeführt. Bei einem Sauerstoffgehalt der atmosphärischen Luft von 21 Vol.-% werden dem Gasmotor 3,2 m³/h Sauerstoff, Rest Inertgas in Form von Stickstoff und CO₂ zugeführt. Damit resultiert ein Verbrennungsgas/Luftgemisch im Gasmotor der folgenden Zusammensetzung:

CH₄ = 6,2 %

O₂ = 19,7 %

N₂ + CO₂ = 74,1 %

Bei der in Fig. 4 dargestellten Modellrechnung wird der Gasmotor nach dem erfindungsgemäßen Verfahren mit einem Schwachgas betrieben, dessen Methangehalt nur 20 Vol.-% beträgt. Dem Gasmotor werden insgesamt 5 m³/h Schwachgas zugeführt mit einem Inertgasanteil von insgesamt 4,0 m³/h. Für die Verbrennung im Gasmotor werden 3,2 m³/h Sauerstoff benötigt, der mit der Verbrennungsluft zugeführt wird. Durch den erfindungsgemäßen Betrieb einer Membrantrennanlage wird das Sauerstoff/Inertgasverhältnis der Verbrennungsluft so eingestellt, dass der Gasmotor ebenfalls mit einem Luftverhältnis λ = 1,6 betrieben werden kann. Dies wird dadurch erreicht, dass in der Membrantrennanlage 4,0 m³/h Inertgas ausgeschleust werden. Einer vergleichenden Betrachtung der Fig. 3 und 4 entnimmt man, dass durch die Reduzierung der mit der Verbrennungsluft zugeführten Inertgasmenge ein hoher Inertgasanteil des methanhaltigen Gasstromes kompensiert werden kann.

Nach Maßgabe der benötigten Verbrennungsluftmenge und der erforderlichen Änderung des Sauerstoff/Stickstoffverhältnisses können mehrere Gaspermeationsmodule parallel und/oder in Reihe geschaltet werden. Versuche an einem mit Deponiegas betriebenen 50-kW-Gasmotor haben gezeigt, dass der Motor auch bei einem Methangehalt von nur noch 25 Vol.-% volle Leistung bringt, wenn das Sauerstoff/Stickstoffverhältnis der Verbrennungsluft durch Verwendung der Membrantrennanlage entsprechend verändert wird.

Als Gaspermeationsmodule können kommerzielle Module mit spiralförmig gewickelten Membranen, Hohlfasermembranen oder Kapillarmembranen eingesetzt werden. Als Membranmaterialien eignen sich z.B. Polysulfone, insbesondere auch mit einer Beschichtung aus Silikon, Polyethersulfone, Polyimide, Celluloseacetat, u.a.. Die genannten Materialien weisen bevorzugte Permeabilitäten für CO₂ und O₂ und nur geringe Permeabilitäten für N₂ auf.

Der mit dem Gasmotor/Generatorsatz erzeugte Strom 8 kann in ein Stromnetz eingespeist werden. Anfallende Wärme 9 kann ebenfalls genutzt werden. Das erfindungsgemäße Verfahren ermöglicht einen leistungsfähigen Betrieb von mit Deponiegas 7 betriebenen Gasmotor/Generatorsätzen auf Deponien. Insbesondere kann durch das erfindungsgemäße Verfahren die Laufzeit vorhandener Gasmotor/Generatorsätze auf geschlossenen Deponien, deren Methangasproduktion nachlässt, verlängert werden.

In Steinkohlebergwerken 10 ist das erfindungsgemäße Verfahren ebenfalls vorteilhaft anwendbar, da Grubengas auch mit sehr niedrigem Methangehalt zur Stromerzeugung genutzt werden kann. Das erfindungsgemäße Verfahren ist einsetzbar, ohne das z. B. in Bezug auf die Bewetterung Änderungen vorgenommen werden müssen. Das erfindungsgemäße Verfahren ist unabhängig gegen betriebsmäßige Schwankungen in der Gaszusammensetzung. Weitere vorteilhafte Anwendungen erschließen sich zur Nutzung von Biogas aus Vergärungsanlagen oder Faulprozessen auf Kläranlagen.

## Patentansprüche

1. Verfahren zur Nutzung von methanhaltigem Grubengas, Deponiegas und Biogas aus Vergärungsanlagen und Faulprozessen auf Kläranlagen, dessen Methangehalt unter 40 Vol.-% liegt, wobei das Gas zum Zwecke der Stromerzeugung dem Gasmotor eines Gasmotor-/Generatorsatzes zugeführt wird und wobei der Inertgasgehalt der dem Gasmotor zugeführten Verbrennungsluft durch eine dem Gasmotor vorgeschaltete Membrantrennanlage reduziert und **dadurch** das Sauerstoff/Stickstoffverhältnis der Verbrennungsluft verändert wird, **dadurch gekennzeichnet, dass** die mittels der Membrantrennanlage aus der Verbrennungsluft abgetrennte Inertgasmenge der inertgasmenge entspricht, die mit dem methanhaltigen Gasstrom dem Gasmotor zugeführt wird, und dass der Gasmotor mit einem unter motortechnischen und abgastechnischen Gesichtspunkten optimalen Luftverhältnis von λ = 1,5 bis 1,8 betrieben wird.

2. Verfahren nach Anspruch 1, **dadurch gekennzeichnet, dass** der Gasmotor mit einem Luftverhältnis von λ = 1,6 betrieben wird.

3. Verfahren nach Anspruch 1 oder 2, **dadurch gekennzeichnet, dass** atmosphärische Luft verdichtet und einem Gaspermeationsmodul der Membrantrennanlage zugeführt wird, dessen Membranen eine bevorzugte Permeabilität für Sauerstoff aufweisen, wobei ein Permeat mit einem gegenüber der atmosphärischen Luft reduzierten Inertgasgehalt aus dem Gaspermeationsmodul abgezogen und dem Gasmotor als Verbrennungsluft zugeführt wird.

## Claims

1. Method of utilising methane-containing mine gas, landfill gas and biogas from fermentation plants and decomposition processes in sewage treatment plants, the methane content of which gas is less than 40% by volume, wherein the gas is fed to the gas engine of a gas engine/generator set for the purpose of generating power, and wherein the inert gas content of the combustion air fed to the gas engine is reduced by a membrane separating installation connected upstream of the gas engine and thus the oxygen/nitrogen ratio of the combustion air is changed, **characterised in that** the quantity of inert gas removed from the combustion air by means of the membrane separating installation corresponds to the quantity of inert gas which is fed to the gas engine with the methane-containing gas stream, and **in that** the gas engine is operated at an air ratio of λ = 1.5 to 1.8 which is optimal in respect of engine and exhaust gas aspects.

2. Method according to claim 1, **characterised in that** the gas engine is operated at an air ratio of λ = 1.6.

3. Method according to claim 1 or 2, **characterised in that** atmospheric air is compressed and fed to a gas permeation module of the membrane separating installation, the membranes of which have a preferred permeability for oxygen, wherein a permeate with a reduced inert gas content compared to the atmospheric air is withdrawn from the gas permeation module and fed to the gas engine as combustion air.

## Revendications

1. Procédé d'utilisation de grisou, de gaz de décharge et de biogaz contenant du méthane, et provenant d'installations de fermentation et de processus de pourrissement sur des stations d'épuration, dont la teneur en méthane est inférieure à 40 % en volume, et dont le gaz est acheminé vers un moteur à gaz d'un système à moteur à gaz/ générateur afin de produire de l'électricité, et la teneur en gaz inertes de l'air de combustion acheminé vers le moteur à gaz est réduite grâce à une installation de séparation à membrane placée en amont du moteur à gaz, ce qui modifie le rapport oxygène/azote de l'air de combustion,
**caractérisé en ce que**
la quantité de gaz inertes séparée de l'air de combustion au moyen de l'installation de séparation à membrane, correspond à la quantité de gaz inertes qui est acheminée vers le moteur à gaz avec le courant de gaz contenant du méthane, et
le moteur à gaz fonctionne avec un rapport d'air optimal de λ = 1,5 à 1,8 du point de vue du moteur et des gaz d'échappement.

2. Procédé selon la revendication 1,
**caractérisé en ce que**
le moteur à gaz fonctionne avec un rapport d'air de λ = 1,6.

3. Procédé selon la revendication 1 ou la revendication 2,
**caractérisé en ce que**
l'air atmosphérique est compressé et acheminé vers un module de perméation gazeuse de l'installation de séparation à membrane, dont les membranes ont une perméabilité préférée pour l'oxygène, et un perméat ayant une teneur en gaz inertes réduite par rapport à l'air atmosphérique est retiré du module de perméation gazeuse et acheminé vers le moteur à gaz.
